(19) Europäisches Patentamt
European Patent Office
Office européen des brevets

(11) **EP 4 346 288 A1**

(12) **EUROPEAN PATENT APPLICATION**
published in accordance with Art. 153(4) EPC

(43) Date of publication:
**03.04.2024 Bulletin 2024/14**

(21) Application number: **22897638.7**

(22) Date of filing: **14.11.2022**

(51) International Patent Classification (IPC):
***H04W 48/02*** *(2009.01)*

(52) Cooperative Patent Classification (CPC):
**H04W 48/02; H04W 72/54; H04W 72/541; H04W 88/08**

(86) International application number:
**PCT/CN2022/131642**

(87) International publication number:
**WO 2023/093555 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 CN 202111407124**

(71) Applicant: **ZTE Corporation**
**Shenzhen, Guangdong 518057 (CN)**

(72) Inventors:
- **YE, Xinquan**
  **Shenzhen, Guangdong 518057 (CN)**
- **CHEN, Yijian**
  **Shenzhen, Guangdong 518057 (CN)**
- **YU, Guanghui**
  **Shenzhen, Guangdong 518057 (CN)**
- **LU, Zhaohua**
  **Shenzhen, Guangdong 518057 (CN)**

(74) Representative: **Regimbeau**
**20, rue de Chazelles**
**75847 Paris Cedex 17 (FR)**

# (54) METHOD FOR DETERMINING SERVICE ACCESS POINT, AND INFORMATION SENDING METHOD, COMMUNICATION NODE AND STORAGE MEDIUM

(57) Provided are a method for determining a service access point, an information sending method, a communication node, and a storage medium. The method for determining a service access point includes the operations below. Indication parameter information is acquired; the indication parameter information includes the first indication information, the second indication information, and the third indication information. The priority order of a terminal device is determined according to the first indication information. Based on the second indication information and the third indication information, a service AP of each terminal device is determined in sequence according to the priority order.

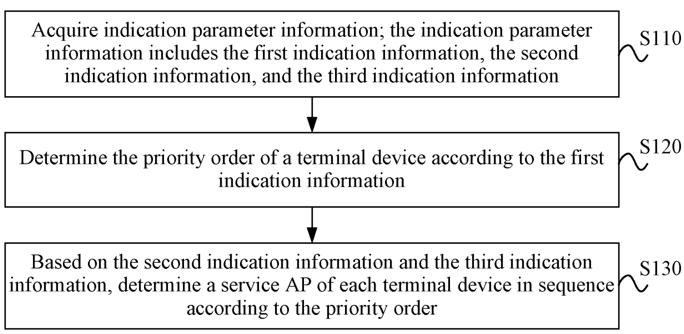


**FIG. 2**

EP 4 346 288 A1

## Description

TECHNICAL FIELD

The present application relates to the field of communication technology, for example, a method for determining a service access point, an information sending method, a communication node, and a storage medium.

BACKGROUND

In a large-scale distributed or wireless cellular network, there may be a scenario where multiple access points (APs) simultaneously serve multiple user equipments (UEs), respectively. Multiple UEs reuse the same time-frequency resources simultaneously, and interference between the UEs is inevitable. However, currently, when a service AP is determined for a UE, receiving signals is often considered while interference conditions are not taken into account, which affects the reliability of the communication system.

SUMMARY

Embodiments of the present application provide a method for determining a service access point. The method includes the steps below.

Indication parameter information is acquired; the indication parameter information includes the first indication information, the second indication information, and the third indication information.

The priority order of a terminal device is determined according to the first indication information.

Based on the second indication information and the third indication information, a service AP of each terminal device is determined in sequence according to the priority order.

Embodiments of the present application provide an information sending method. The method includes the operation below.

Indication parameter information is sent; the indication parameter information includes the first indication information, the second indication information, and the third indication information.

Embodiments of the present application provide a communication node. The communication node includes a processor that, when executing a computer program, is configured to implement the method of any of the preceding embodiments.

Embodiments of the present application also provide a computer-readable storage medium storing a computer program which, when executed by a processor, implements the method of any of the preceding embodiments.

BRIEF DESCRIPTION OF DRAWINGS

FIG. 1 is a diagram illustrating a network of a wireless communication system according to an embodiment.

FIG. 2 is a flowchart of a method for determining a service access point according to an embodiment.

FIG. 3 is a diagram illustrating that a service access point is determined according to an embodiment.

FIG. 4 is a diagram illustrating that another service access point is determined according to an embodiment.

FIG. 5 is a diagram illustrating that another service access point is determined according to an embodiment.

FIG. 6 is a diagram illustrating the structure of a service access point determination apparatus according to an embodiment.

FIG. 7 is a flowchart of an information sending method according to an embodiment.

FIG. 8 is a diagram illustrating the structure of an information sending apparatus according to an embodiment.

FIG. 9 is a diagram illustrating the structure of an access network device according to an embodiment.

FIG. 10 is a diagram illustrating the structure of a UE according to an embodiment.

DETAILED DESCRIPTION

It is to be understood that the specific embodiments described herein are intended to explain the present application and not to limit the present application. Embodiments of the present application are described hereinafter in detail in conjunction with drawings.

Distributed multiple-input multiple-output (D-MIMO) and cell-free massive multiple-input multiple-output (CF-MIMO), as potential key technologies for multi-antenna direction, have received increasing attention. A significant feature of these technologies is that the spatial distribution of APs in a given area is more decentralized than the centralized APs used by the New Radio (NR) technology, and the number of APs is relatively large, with multiple APs simultaneously serving multiple different UEs. Since multiple UEs reuse the same time-frequency resource simultaneously, interference between them is inevitable.

In potential CF-MIMO application scenarios (such as large stadiums, malls, airports, and automated factories) in the future, the spatial distribution of APs and UEs may be very complex, and the following scenarios may occur: Some areas are densely populated with a large number of APs or UEs; some areas are sparsely populated with a small number of APs or UEs; some areas are moderately populated with a moderate number of APs or UEs. Therefore, the methods for determining a service AP for a UE, determining whether AP collaborative transmission is required, determining the scale of AP collaborative transmission, and other methods may be different in different scenarios.

However, currently, when a service AP is determined for a UE, a large-scale parameter or a reference signal receiving power (RSRP) parameter of each AP to a specific UE is mainly used as the basis for selecting a certain AP/certain APs with a larger large-scale parameter or larger RSRP parameter as the service AP/set of service APs for the specific UE. That is, methods in the related art are often considered only from the perspective of receiving signals; interference situations are not taken into account nor whether AP collaboration is required for different scenarios is discussed, which affects the communication quality of the UE and the reliability of the communication system.

The method for determining a service access point and the information sending method according to the present application may be applied to various types of wireless communication systems, such as a Long-Term Evolution (LTE) system, a 5th-generation (5G) mobile communication technology system, a LTE and 5G hybrid architecture system, a 5G NR system, and a new communication system emerging in future communication development, for example, a 6th-generation (6G) mobile communication technology system. FIG. 1 is a diagram illustrating a network of a wireless communication system according to an embodiment. As shown in FIG. 1, the wireless communication system includes a terminal device 110, an access network device 120, and a core network device 130.

The terminal device 110 may be a device providing voice/data connectivity to a user, for example, a handheld device having a wireless connection function and an in-vehicle device. Examples of some terminal devices 110 are as follows: UE, a mobile station, a tablet computer, a notebook computer, an ultra-mobile personal computer (UMPC), a handheld computer, a netbook, a personal digital assistant (PDA), and other user equipment that can be networked; IoT nodes in the Internet of Things; in-vehicle communication devices in the Internet of Vehicles; entertainment and game devices or systems; or a global positioning system device. Embodiments of the present application do not limit the specific technology and the specific device configuration used by the terminal device.

The access network device 120 is an access device through which the terminal device 110 wirelessly accesses the wireless communication system and may be an AP. The AP includes but is not limited to a base station, an evolved NodeB (eNodeB), a transmission reception point (TRP), a next generation NodeB (gNB) in the 5G mobile communication system, a base station in a future mobile communication system, and an access node in a Wireless Fidelity system. The access network device 120 may also be a module or unit that performs part of the functions of the base station, for example, a central unit (CU) or a distributed unit (DU). Embodiments of the present application do not limit the specific technology and the specific device configuration used by the access network device.

The core network device 130 may include an access and mobility management network element and a session management network element. Exemplarily, the terminal device 110 may access the core network through the access network device 120, thereby realizing data transmission.

In the embodiment of the present application, a method for determining a service access point, an information sending method, a communication node, and a storage medium are provided, which is able to be run in the preceding wireless communication system. Thus, interference between terminal devices is reduced while a service AP of a terminal device is determined, and communication quality and reliability of the communication system are improved.

The method for determining a service access point, the information sending method, the communication node, and the technical effect thereof are described below.

FIG. 2 is a flowchart of a method for determining a service access point according to an embodiment. As shown in FIG. 2, the method provided by this embodiment is applicable to an access network device (such as an AP) or a core network device, and the method includes the steps below.

In S110, indication parameter information is acquired; the indication parameter information includes a first indication information, a second indication information, and a third indication information.

In an embodiment, the first indication information includes but is not limited to at least one of the following information: a traffic volume requirement of a terminal device, a delay requirement of a terminal device, a signal-to-noise ratio requirement of a terminal device, a large-scale parameter of a terminal device, a reference signal receiving power (RSRP) parameter of a terminal device, or a distance parameter of a terminal device.

If the first indication information includes the traffic volume requirement of the terminal device, the first indication information is a set including K elements, and each element in the set denotes a traffic volume requirement of one terminal device. For example, the first indication information is a set ($Tht_1$, $Tht_2$,L , $Tht_j$,L , $Tht_k$), and $Tht_j$ denotes the traffic volume requirement of terminal device j.

If the first indication information includes the delay requirement of the terminal device, the first indication information is a set including K elements, and each element in the set denotes a delay requirement of one terminal device. For example, the first indication information is a set ($T_1$, $T_2$,L , $T_j$,L ,$T_k$), and $T_j$ denotes the delay requirement of terminal device j.

If the first indication information includes the signal-to-noise ratio requirement of the terminal device, the first indication information is a set including K elements, and each element in the set denotes a signal-to-noise ratio requirement of one terminal device. For example, the first indication information is a set ($SINR_1$, $SINR_2$,L , $SINR_j$,L , $SINR_K$), and $SINR_j$ denotes the signal-to-noise ratio requirement of terminal device j.

If the first indication information includes the large-scale parameter of the terminal device, the first indication information is a set including K element groups, each element group in the set corresponds to one terminal device and includes M elements, and each element in the element group denotes a large-scale parameter between the terminal device corresponding to the element group and different APs. For example, the first indication information is a set ($B_1$, $B_2$,L , $B_j$,L , $B_K$), the element group $B_j$ corresponds to terminal device j, the element group $B_j$ includes M elements ($\beta_{1j}$, $\beta_{2j}$,L , $\beta_{ij}$,L , $\beta_{Mj}$), and $\beta_{ij}$ denotes the large-scale parameter between terminal device j and AP i.

If the first indication information includes the RSRP parameter of the terminal device, the first indication information is a set including K element groups, each element group in the set corresponds to one terminal device and includes M elements, and each element in the element group denotes an RSRP parameter between the terminal device corresponding to the element group and different APs. For example, the first indication information is a set ($RP_1$, $RP_2$,L , $RP_j$,L , $RP_K$), the element group $RP_j$ corresponds to terminal device j, the element group $RP_j$ includes M elements ($RP_{1j}$, $RP_{2j}$,L , $RP_{ij}$,L , $RP_{Mj}$), and $RP_{ij}$ denotes the RSRP parameter between terminal device j and AP i, that is, the reference signal power of AP i received by terminal device j.

If the first indication information includes the distance parameter of the terminal device, the first indication information is a set including K element groups, each element group in the set corresponds to one terminal device and includes M elements, and each element in the element group denotes a distance parameter between the terminal device corresponding to the element group and different APs. For example, the first indication information is a set ($D_1$, $D_2$,L , $D_j$,L , $D_K$), the element group $D_j$ corresponds to terminal device j, the element group $D_j$ includes M elements ($d_{1j}$, $d_{2j}$,L , $d_{ij}$,L , $d_{Mj}$), and $d_{ij}$ denotes the distance parameter between terminal device j and AP i, that is, the distance between terminal device j and AP i.

In the present application, K denotes the number of terminal devices, M denotes the number of APs, and both M and K are integers greater than 1.

In an embodiment, the second indication information includes but is not limited to at least one of the following information: a large-scale parameter of a terminal device, an RSRP parameter of a terminal device, or a distance parameter of a terminal device.

In an embodiment, the third indication information at least includes a first parameter set $a_{max}$ and a second parameter set $Nc_{max}$, the first parameter set $a_{max}$ is configured to indicate the maximum number of different terminal devices simultaneously served by an AP, and the second parameter set $Nc_{max}$ is configured to indicate the maximum number of different APs simultaneously serving the terminal device, that is, the maximum number of collaborative APs for a terminal device. Both he elements in the first parameter set $a_{max}$ and the second parameter set $Nc_{max}$ are positive integers.

The first parameter set $a_{max}$ is configured to limit an AP's ability to simultaneously serve different terminal devices. Different APs may have different configurations. For example, if only one element is included in the second parameter set $a_{max}$, it is indicated that all APs simultaneously serve the same maximum number of different terminal devices at most. For another example, if M elements are included in the first parameter set $a_{max}$, some of the M elements have different values or the values of all elements are different, that is, the maximum numbers of different terminal devices that some APs are able to simultaneously serve at most are different, or the maximum numbers of different terminal devices that all APs are able to simultaneously serve at most are completely different.

The second parameter set $Nc_{max}$ is configured to limit the size of the terminal device collaboration set. Different terminal devices may have different configurations. For example, if only one element is included in the second parameter set $Nc_{max}$, it is indicated that the maximum number of collaborative APs of all terminal devices is the same. For another example, if K elements are included in the second parameter set $Nc_{max}$, the values of some of the K elements are different or all of the elements are different, that is, the maximum numbers of collaborative APs of some terminal devices are different, or the maximum numbers of collaborative APs of all terminal devices are completely different.

In an embodiment, the first indication information may be a parameter related to the priority order of the terminal device and configured to determine the priority order of the terminal device; the second indication information and the third indication information are used for determining a service AP of the terminal device.

In S120, the priority order of a terminal device is determined according to the first indication information.

In the present application, the priority order refers to the order in which different terminal devices select APs when the service AP of each terminal device is determined.

In an embodiment, the priority order satisfies at least one of the following rules 1 to 6:

In rule 1, if the first indication information includes the traffic volume requirement of the terminal device, the priority order is arranged in descending order according to the value of the traffic volume requirement of the terminal device.

For example, if the first indication information is a set ($Tht_1$, $Tht_2$,L , $Tht_j$,L , $Tht_K$), and $Tht_K$ > $Tht_{K-1}$ >L > $Tht_j$ >L > $Tht_1$, the priority order in descending order according to the traffic volume is $UE_K$, $UE_{K-1}$,L , $UE_j$,L , $UE_1$.

In rule 2, if the first indication information includes the delay requirement of the terminal device, the priority order is arranged in ascending order according to the value of the delay requirement of the terminal device.

For example, if the first indication information is a set ($T_1$, $T_2$,L , $T_j$,L , $T_K$), and $T_2$ <$T_1$ <L < $T_j$ <L <$T_K$, the priority order in ascending order according to the delay is $UE_2$, $UE_1$,L , $UE_j$,L , $UE_K$

In rule 3, if the first indication information includes the signal-to-noise ratio requirement of the terminal device, the priority order is arranged in descending order according to the value of the signal-to-noise ratio requirement of the terminal device.

For example, if the first indication information is a set ($SINR_1$, $SINR_2$,L , $SINR_j$,L , $SINR_K$), and $SINR_1$ >$SINR_2$ >L >$SINR_j$ >L >$SINR_K$, the priority order in descending order according to the signal-to-noise ratio is $UE_1$, $UE_2$,L , $UE_j$,L , $UE_K$.

In rule 4, if the first indication information includes the large-scale parameter of the terminal device, the priority order is arranged in descending order according to the value of a first reference value of the terminal device.

In an embodiment, the first reference value of the terminal device is an average value of elements in each element group in the first indication information; alternatively, the first reference value of the terminal device is the maximum value of elements in each element group in the first indication information; alternatively, the first reference value of the terminal device is the minimum value of elements in each element group in the first indication information.

For example, the first indication information is a set ($B_1$, $B_2$,L , $B_j$,L , $B_K$), element group $B_j$ corresponds to terminal device j, element group $B_j$ includes M elements ($\beta_{1j}$, $\beta_{2j}$,L , $\beta_{ij}$,L , $\beta_{Mj}$), the first reference values of K terminal devices are the average values $\left(\frac{1}{M}\sum_{i=1}^{M}\beta_{i1},\frac{1}{M}\sum_{i=1}^{M}\beta_{i2},L\ ,\frac{1}{M}\sum_{i=1}^{M}\beta_{ij},L\ ,\frac{1}{M}\sum_{i=1}^{M}\beta_{iK}\right)$ of elements in each element group in the first indication information, and $\frac{1}{M}\sum_{i=1}^{M}\beta_{i1}>\frac{1}{M}\sum_{i=1}^{M}\beta_{i2}>L\ >\frac{1}{M}\sum_{i=1}^{M}\beta_{ij}>L\ >\frac{1}{M}\sum_{i=1}^{M}\beta_{iK}$; the priority order in descending order according to values of the first reference values of the terminal devices is $UE_1$,$UE_2$,L ,$UE_j$,L ,$UE_K$.

For another example, the first indication information is a set ($B_1$,$B_2$,L ,$B_j$,L ,$B_K$), element group $B_j$ corresponds to terminal device j, element group $B_j$ includes M elements ($\beta_{1j}$,$\beta_{2j}$,L ,$\beta_{ij}$,L ,$\beta_{Mj}$), the first reference values of K terminal devices are the minimum values (min{$\beta_{11}$,$\beta_{21}$,L ,$\beta_{M1}$},min{$\beta_{12}$,$\beta_{22}$,L ,$\beta_{M2}$},L ,min{$\beta_{1j}$, $\beta_{2j}$,L ,$\beta_{Mj}$},L ,min{$\beta_{1K}$,$\beta_{2K}$,L ,$\beta_{MK}$}) of elements in each element group in the first indication information, and min{$\beta_{12}$,$\beta_{22}$,L ,$\beta_{M2}$} >min{$\beta_{11}$,$\beta_{21}$,L ,$\beta_{M1}$} >L >min{$\beta_{1j}$, $\beta_{2j}$,L ,$\beta_{Mj}$} >L >min{$\beta_{1K}$,$\beta_{2K}$,L ,$\beta_{MK}$} ; the priority order in descending order according to values of the first reference values of the terminal devices is $UE_{K-1}$,$UE_K$,L ,$UE_j$,L ,$UE_1$.

For another example, the first indication information is a set ($B_1$,$B_2$,L ,$B_j$,L ,$B_K$), element group $B_j$ corresponds to terminal device j, element group $B_j$ includes M elements ($\beta_{1j}$,$\beta_{2j}$,L ,$\beta_{ij}$,L ,$\beta_{Mj}$), the first reference values of K terminal devices are the maximum values (*max*{$\beta_{11}$,$\beta_{21}$,L ,$\beta_{M1}$},*max*{$\beta_{12}$,$\beta_{22}$,L ,$\beta_{M2}$},L ,*max*{$\beta_{1j}$,$\beta_{2j}$,L ,$\beta_{Mj}$},L ,*max*{$\beta_{1K}$, $\beta_{2K}$,L ,$\beta_{MK}$}) of elements in each element group in the first indication information, and *max*{$\beta_{1K-1}$,$\beta_{2K-1}$,L ,$\beta_{MK-1}$} >max{$\beta_{1K}$,$\beta_{2K}$,L ,$\beta_{MK}$} >L >max{$\beta_{1j}$,$\beta_{2j}$,L ,$\beta_{Mj}$} >L >max{$\beta_{11}$,$\beta_{21}$,L ,$\beta_{M1}$} ; the priority order in descending order according to values of the first reference values of the terminal devices is $UE_{K-1}$,$UE_K$,L ,$UE_j$,L ,$UE_1$.

In rule 5, if the first indication information includes the RSRP parameter of the terminal device, the priority order is arranged in descending order according to the value of a second reference value of the terminal device.

In an embodiment, the second reference value of the terminal device is an average value of elements in each element group in the first indication information; alternatively, the second reference value of the terminal device is the maximum value of elements in each element group in the first indication information; alternatively, the second reference value of the terminal device is the minimum value of elements in each element group in the first indication information.

If the first indication information includes the RSRP parameter of the terminal device, the method for determining the priority order is similar to that in rule 4 and is not repeated herein for the sake of brevity.

In rule 6, if the first indication information includes the distance parameter of the terminal device, the priority order is arranged in ascending order according to the value of a third reference value of the terminal device.

In an embodiment, the third reference value of the terminal device is an average value of elements in each element group in the first indication information; alternatively, the third reference value of the terminal device is the maximum value of elements in each element group in the first indication information; alternatively, the third reference value of the terminal device is the minimum value of elements in each element group in the first indication information.

For example, the first indication information is a set ($D_1$, $D_2$,L , $D_j$,L , $D_K$), element group $D_j$ corresponds to terminal device j, element group $D_j$ includes M elements ($d_{1j}$, $d_{2j}$,L , $d_{ij}$,L , $d_{Mj}$), the third reference values of K terminal devices are the average values

$$\left(\frac{1}{M}\sum_{i=1}^{M}d_{i1},\frac{1}{M}\sum_{i=1}^{M}d_{i2},\text{L}\ ,\frac{1}{M}\sum_{i=1}^{M}d_{ij},\text{L}\ ,\frac{1}{M}\sum_{i=1}^{M}d_{iK}\right)$$

of elements in each element group in the first indication information, and

$$\frac{1}{M}\sum_{i=1}^{M}d_{i1}<\frac{1}{M}\sum_{i=1}^{M}d_{i2}<\text{L}\ <\frac{1}{M}\sum_{i=1}^{M}d_{ij}<\text{L}\ <\frac{1}{M}\sum_{i=1}^{M}d_{iK}$$

; the priority order in ascending order according to values of the third reference values of the terminal devices is $UE_1$, $UE_2$,L , $UE_j$,L , $UE_K$.

For another example, the first indication information is a set ($D_1$, $D_2$,L , $D_j$,L , $D_K$), element group $D_j$ corresponds to terminal device j, element group $D_j$ includes M elements ($d_{1j}$, $d_{2j}$,L , $d_{ij}$,L , $d_{Mj}$), the third reference values of K terminal devices are the minimum values (min{$d_{11}$, $d_{21}$,L , $d_{M1}$},min{$d_{12}$, $d_{22}$,L , $d_{M2}$},L , min{$d_{1j}$, $d_{2j}$,L , $d_{Mj}$},L , min{$d_{1K}$, $d_{2K}$,L , $d_{MK}$}) of elements in each element group in the first indication information, and min{$d_{12}$, $d_{22}$,L , $d_{M2}$} <min{$d_{11}$, $d_{21}$,L , $d_{M1}$} <L <min{$d_{1j}$, $d_{2j}$,L , $d_{Mj}$} <L <min{$d_{1K}$, $d_{2K}$,L , $d_{MK}$}; the priority order in ascending order according to values of the third reference values of the terminal devices is $UE_2$, $UE_1$,L , $UE_j$,L , $UE_K$.

For another example, the first indication information is a set ($D_1$, $D_2$,L , $D_j$,L , $D_K$), element group $D_j$ corresponds to terminal device j, element group $D_j$ includes M elements ($d_{1j}$, $d_{2j}$,L , $d_{ij}$,L , $d_{Mj}$), the third reference values of K terminal devices are the maximum values (max{$d_{11}$, $d_{21}$,L , $d_{M1}$}, max{$d_{12}$, $d_{22}$,L , $d_{M2}$},L , max{$d_{1j}$, $d_{2j}$,L , $d_{Mj}$},L , max{$d_{1K}$, $d_{2K}$,L , $d_{MK}$}) of elements in each element group in the first indication information, and max{$d_{1K-1}$, $d_{2K-1}$,L , $d_{MK-1}$} <max{$d_{1K}$, $d_{2K}$,L , $d_{MK}$} <L <max{$d_{1j}$, $d_{2j}$,L , $d_{Mj}$} <L <max{$d_{11}$, $d_{21}$,L , $d_{M1}$}; the priority order in ascending order according to values of the third reference values of the terminal devices is $UE_{K-1}$, $UE_K$,L , $UE_j$,L , $UE_1$.

In S130, based on the second indication information and the third indication information, a service AP of each terminal device is determined in sequence according to the priority order.

In an embodiment, the method of S130 may include determining, based on the second indication information, the third indication information, and a service AP determination criterion, the service AP of each terminal device in sequence according to the priority order from a set of candidate APs.

The set of candidate APs includes all APs capable of serving the terminal device.

The service AP determination criterion may be pre-configured or pre-specified in advance. The service AP determination criterion includes but is not limited to any one of the following: The value of a large-scale parameter of a service AP of the terminal device is within a specific range; the value of an RSRP parameter of a service AP of the terminal device is within a specific range; the value of a distance parameter of a service AP of the terminal device is within a specific range; the maximum value of the ratio of a large-scale parameter of a service AP of a certain terminal device to a large-scale parameter between another terminal device (that is, excluding the certain terminal device) and the service AP of the certain terminal device is within a specific range; the minimum value of the ratio of a large-scale parameter of a service AP of a certain terminal device to a large-scale parameter between another terminal device (that is, excluding the certain terminal device) and the service AP of the certain terminal device is within a specific range; the average value of the ratio of a large-scale parameter of a service AP of a certain terminal device to a large-scale parameter between another terminal device (that is, excluding the certain terminal device) and the service AP of the certain terminal device is within a specific range; the maximum value of the ratio of an RSRP parameter of a service AP of a certain terminal device to an RSRP parameter between another terminal device (that is, excluding the certain terminal device) and the service AP of the certain terminal device is within a specific range; the minimum value of the ratio of an RSRP parameter of a service AP of a certain terminal device to an RSRP parameter between another terminal device (that is, excluding the certain terminal device) and the service AP of the certain terminal device is within a specific range; the average value of the ratio of an RSRP parameter of a service AP of a certain terminal device to an RSRP parameter between another terminal device (that is, excluding the certain terminal device) and the service AP of the certain terminal device is within a specific range; the maximum value of the ratio of a distance parameter of a service AP of a certain terminal device to a distance parameter between another terminal device (that is, excluding the certain terminal device) and the service AP of the certain terminal device is within a specific range; the minimum value of the ratio of a distance parameter of a service AP of a certain terminal device to a distance parameter between another terminal device (that is, excluding the certain terminal device) and the service AP of the certain terminal device is within a specific range; the average value of the ratio of a distance parameter of a service AP of a certain terminal device to a distance parameter between another terminal device (that is, excluding the certain terminal device) and the service AP of the certain terminal device is within a specific range. The preceding specific range includes [a, b], (a, b), [a, b), (a, b], [a, + ∞), (a, + ∞), (-∞, b], and (-∞, b). a and b are real numbers.

In example 1, the second indication information is the large-scale parameter of the terminal device, the service AP determination criterion is that

$$\min\{\frac{\beta_{\Omega j}}{\beta_{\Omega 1}},L\ ,\frac{\beta_{\Omega j}}{\beta_{\Omega \xi}},L\ ,\frac{\beta_{\Omega j}}{\beta_{\Omega K}}\}>5$$

, Ω is the set of candidate APs, j≠$\xi$, j,$\xi$ are integers between 1 and K, and elements in Ω are integers between 1 and M. The service AP determination criterion indicates that only if the minimum value of the ratios of the large-scale parameter $\beta_{\Omega j}$ between AP Ω and terminal device j to the large-scale parameter $\beta_{\Omega \xi}$ between AP Ω and all other terminal devices $\xi$ is greater than 5, AP Ω may be the service AP of terminal device j.

In example 2, the second indication information is the large-scale parameter of the terminal device, the service AP determination criterion is that

$$\max\{\frac{\beta_{\Omega j}}{\beta_{\Omega 1}},L\ ,\frac{\beta_{\Omega j}}{\beta_{\Omega \xi}},L\ ,\frac{\beta_{\Omega j}}{\beta_{\Omega K}}\}<20$$

, Ω is the set of candidate APs, j≠$\xi$, j,$\xi$ are integers between 1 and K, and elements in Ω are integers between 1 and M. The service AP determination criterion indicates that only if the maximum value of the ratios of the large-scale parameter $\beta_{\Omega j}$ between AP Ω and terminal device j to the large-scale parameter $\beta_{\Omega \xi}$ between AP Ω and all other terminal devices $\xi$ is less than 20, AP Ω may be the service AP of terminal device j.

In example 3, the second indication information is the large-scale parameter of the terminal device, the service AP determination criterion is that

$$\frac{1}{K-1}\sum_{\xi \neq j,\xi=1}^{K}\frac{\beta_{\Omega j}}{\beta_{\Omega \xi}}>8$$

, Ω is the set of candidate APs, j≠$\xi$, j,$\xi$ are integers between 1 and K, and elements in Ω are integers between 1 and M. The service AP determination criterion indicates that only if the average value of the ratios of the large-scale parameter $\beta_{\Omega j}$ between AP Ω and terminal device j to the large-scale parameter $\beta_{\Omega \xi}$ between AP Ω and all other terminal devices $\xi$ is greater than 8, AP Ω may be the service AP of terminal device j.

In example 4, the second indication information is the distance parameter of the terminal device, the service AP determination criterion is that $d_{\Omega j} \in [2, 1\ 0]$, Ω is the set of candidate APs, j is an integer between 1 and K, and elements in Ω are integers between 1 and M. The service AP determination criterion indicates that only if the distance between AP Ω and terminal device j satisfies that $d_{\Omega j} \in [2, 1\ 0]$, AP Ω may be the service AP of terminal device j.

In example 5, the second indication information is the distance parameter of the terminal device, the service AP determination criterion is that $d_{\Omega j} \in (3, +\infty)$, Ω is the set of candidate APs, j is an integer between 1 and K, and elements in Ω are integers between 1 and M. The service AP determination criterion indicates that only if the distance between AP Ω and terminal device j satisfies that $d_{\Omega j} \in (3, +\infty)$, AP Ω may be the service AP of terminal device j.

In example 6, the second indication information is the distance parameter of the terminal device, the service AP determination criterion is that $d_{\Omega j} \in (0, 5)$, Ω is the set of candidate APs, j is an integer between 1 and K, and elements in Ω are integers between 1 and M. The service AP determination criterion indicates that only if the distance between AP Ω and terminal device j satisfies that $d_{\Omega j} \in (0, 5)$, AP Ω may be the service AP of terminal device j.

In an embodiment, the method of determining, based on the second indication information, the third indication information, and the service AP determination criterion, the service AP of the each terminal device in sequence according to the priority order from the set of candidate APs may include the three steps below:

In step 1, the set of candidate APs, a first counter, and a second counter of each AP in the set of candidate APs are initialized.

In step 2, the count value i of the first counter is configured to be 1, an i-th terminal device in the priority order is configured as a target terminal device, and based on the second indication information, the third indication information, and the service AP determination criterion, a service AP of the target terminal device is determined from the set of candidate APs.

In step 3, the set of candidate APs and the second counter are updated, 1 is added to the count value of the first counter, and when i is less than or equal to K, the execution of configuring the i-th terminal device in the priority order as the target terminal device and determining, based on the second indication information, the third indication information, and the service AP determination criterion, the service AP of the target terminal device from the set of candidate APs is returned until i is greater than K; K denotes the number of terminal devices, and K is an integer greater than 1.

In an embodiment, the method of updating the set of candidate APs and the second counter may include adding 1 to the count value of a second counter of the service AP; in the case where the count value of the second counter of the service AP is less than the maximum count value of the service AP, keeping the set of candidate APs unchanged; or in the case where the count value of the second counter of the service AP is equal to the maximum count value of the service AP, stopping the counting of the second counter of the service AP and removing the service AP from the set of candidate APs.

Exemplarily, the set of candidate APs initialized in step 1 is a set of all APs in the space. It is assumed that MAPs exist in the initial set of candidate APs, that is, the initial set of candidate APs is {1,2,K, M}. The second counter (which may also be referred to as AP reusing counter) of each AP is configured to record the number of different terminal devices that the AP simultaneously serves. The count values of the second counters of the initial M APs are all 0.

When the service AP is determined for the terminal device for the first time, the first terminal device in the priority order is configured as the target terminal device in order of priority, and the service AP of the target terminal device is determined from the set of candidate APs. When it is determined that AP i is the service AP of the target terminal device, the second counter of AP i is incremented by one.

After the service AP is determined for the target terminal device, the set of candidate APs and the second counter need to be updated. Whether the set of candidate APs needs to be updated depends on whether the second counter of an AP reaches the maximum count value of the service AP. It is assumed that the number of different terminal devices AP i at most simultaneously serves is that $a_{max,\ i}$ =2, and if the count value of the second counter of AP i reaches 2, the second counter of AP i stops counting and removes AP i from the set of candidate APs; if the count value of the second counter of AP i does not reach 2, the second counter of AP i continues to operate, and AP i continues to remain in the set of candidate APs.

Then, the next terminal device in the priority order is configured as the target terminal device, and the service AP of the target terminal device is determined from the set of candidate APs again until the service APs are determined for all the terminal devices. In an embodiment, when the service AP is determined for the terminal device, each terminal device selects one or more APs from the set of candidate APs to serve the terminal device itself while the service AP determination criterion and the second parameter set $Nc_{max}$ are satisfied. If the second parameter set of terminal device j is that $Nc_{max,j}$ = 1, the terminal device j in any scenario may select at most one AP to serve the terminal device itself and cannot perform collaborative transmission. If the second parameter set of the terminal device j is that $Nc_{max,j}$ = 4, whether multiple different APs exist for collaborative transmission for terminal device j and the number of collaborative APs depend on the size of the set of candidate APs and the service AP determination criterion. If the set of candidate APs has only one element, terminal device j may select at most one AP to serve the terminal device itself and cannot perform collaborative transmission. If 2 to 3 elements exist in the set of candidate APs, whether multiple different APs exist for collaborative transmission for terminal device j and the size of collaborative transmission depend on the service AP determination criterion, but terminal device j cannot implement the configuration of up to 4 different APs for collaborative transmission of terminal device j. If no less than 4 elements exist in the set of candidate APs, whether multiple different APs exist for collaborative transmission for terminal device j and the size of collaborative transmission depend on the service AP determination criterion, and it is possible for terminal device j to implement the configuration of up to 4 different APs for collaborative transmission of terminal device j. That is, if terminal device j wants to support collaborative transmission, terminal device j needs to ensure that the second parameter set of terminal device j satisfies that $Nc_{max,\ j} \geq 2$, and the set of candidate APs has no less than 2 elements.

Some example embodiments are listed below to illustrate the method for determining a service access point provided in FIG. 2 of the present application. The following example embodiments may be implemented independently or in combination. In the following example embodiments, the terminal device is denoted as UE.

In a first example embodiment, FIG. 3 is a diagram illustrating that a service access point is determined according to an embodiment.

The first indication information is the traffic volume requirement of the UE and is denoted as a set ($Tht_1$, $Tht_2$, $Tht_3$), and $Tht_1 > Tht_2 > Tht_3$.

The second indication information is the distance parameter of the UE. The second indication information is a set including three element groups, that is, ($D_1$, $D_2$, $D_3$). Each element group $D_j$ includes seven elements ($d_{1j}$, $d_{2j}$,L , $d_{ij}$,L , $d_{7j}$).

The third indication information includes a first parameter set that $a_{max}$ =1 and a second parameter set that $Nc_{max}$ =4.

The service AP determination criterion is that $d_{\Omega j} \in [r_1, r_2]$. $0 < r_1 < r_2$. $\Omega$ is the set of candidate APs. j is an integer between 1 and 3. The elements in $\Omega$ are integers between 1 and 7.

According to the first indication information, UEs are arranged in descending order according to the values of the traffic volume requirement of the UEs, and the priority order of UEs in descending order is UE 1, UE 2, and UE 3.

The initial value of the set of candidate APs is $\Omega_0$ ={1,2,3,4,5,6,7}. The initial value of the second counter of each AP in the set of candidate APs is that $N$ = {0,0,0,0,0,0,0}.

Since UE 1 has the highest priority, the service AP of UE 1 is first determined. According to the distance parameter of the UE, the set $\Omega_0$ of candidate APs, the first parameter set that $a_{max}$ =1, the second parameter set that $Nc_{max}$ =4, and the service AP determination criterion that $d_{\Omega 0j} \in [r_1, r_2]$, when j=1, the set of service APs of UE 1 is finally determined, that is, $\Omega_{U1}$ ={1,3,4,6}

The count value of the second counter of each AP in the set of candidate APs after the first update is that $N$ = {1,0,1,1,0,1,0} . Since the first parameter set of the number of different UEs the AP at most serves simultaneously is that $a_{max}$ =1, the second counter of the AP corresponding to the set $\Omega_{U1}$ of service APs of UE 1 stops counting, and the AP in the set $\Omega_{U1}$ of service APs of UE 1 needs to be moved from the initial set $\Omega_0$ of candidate APs to obtain a set of candidate APs after the first update, that is, $\Omega_1$ ={2,5,7}.

UE 2 has the second highest priority, and the service AP of UE 2 is determined next. According to the distance parameter of the UE, the set $\Omega_1$ of candidate APs, the first parameter set $a_{max}$, the second parameter set $Nc_{max}$, and the service AP determination criterion that $d_{\Omega 1j} \in [r_1, r_2]$, when j=2, the set of service APs of UE 2 is finally determined, that is, $\Omega_{U2}$ ={2,5}.

The count value of the second counter of each AP in the set of candidate APs after the second update is that $N$ ={1,1,1,1,1,1,0}. Since the first parameter set of the number of different UEs the AP at most serves simultaneously is that $a_{max}$ =1, the second counter of the AP corresponding to the set $\Omega_{U2}$ of service APs of UE 2 stops counting, and the AP in the set $\Omega_{U2}$ of service APs of UE 2 needs to be moved from the set $\Omega_1$ of candidate APs to obtain a set of candidate APs after the second update, that is, $\Omega_2$ ={7}.

UE 3 has the lowest priority, and the service AP of UE 3 is determined last. According to the distance parameter, the set $\Omega_2$ of candidate APs, the first parameter set $a_{max}$, the second parameter set $Nc_{max}$, and the service AP determination criterion of the UE that $d_{\Omega 2j} \in [r_1, r_2]$, when j=3, the set of service APs of UE 3 is finally determined, that is, $\Omega_{U3}$ ={7}.

After UE 1, UE 2, and UE 3 all determine service APs, the loop process ends. The sets of service APs of UE 1, UE 2, and UE 3 are that $\Omega_{U1}$ ={1,3,4,6}, $\Omega_{U2}$ ={2,5}, and $\Omega_{U3}$ ={7}. Although the second parameter set of the maximum number of collaborative APs for the UE is that $Nc_{max}$ =4, only UE 1 reaches the configured maximum number of different collaborative APs, and UE 3 cannot perform collaborative transmission with only AP 7 at service. If only the service AP determination criterion is considered, $d_{42} \in [r_1, r_2]$, and $d_{43} \in [r_1, r_2]$; then AP 4 may serve UE 2 or UE 3. However, since it is agreed that AP can at most serve one UE, after UE 1 determines the service AP, AP 4 is selected from the set of candidate APs. Then, when UE 2 or UE 3 determines the service AP, AP 4 is no longer in the set of candidate APs, and AP 4 cannot be selected for service. That is, the present application determines the sets of service APs of all UEs under the joint action of factors such as the priority order of the UE, the first parameter set $a_{max}$, the second parameter set $Nc_{max}$, the set of candidate APs, and the service AP determination criterion.

In a second example embodiment, FIG. 4 is a diagram illustrating that a service access point is determined according to an embodiment.

The first indication information is the large-scale parameter of the UE. The first indication information is a set including 4 element groups, that is, ($B_1$, $B_2$, $B_3$, $B_4$). Each element group $B_j$ includes seven elements ($\beta_{1j}$, $\beta_{2j}$,L , $\beta_{ij}$,L , $\beta_{7j}$). The values of j are 1, 2, 3, and 4. The first reference values of the 4 UEs are ($max\{\beta_{11}, \beta_{21}, L, \beta_{71}\}$,$max\{\beta_{12}, \beta_{22}, L, \beta_{M2}\}$,$max\{\beta_{13}, \beta_{23}, L, \beta_{73}\}$,$max\{\beta_{14}, \beta_{24}, L, \beta_{74}\}$), and $max\{\beta_{11}, \beta_{21}, L, \beta_{71}\}$ >$max\{\beta_{13}, \beta_{23}, L, \beta_{73}\}$ >$max\{\beta_{12}, \beta_{22}, L, \beta_{72}\}$ >$max\{\beta_{14}, \beta_{24}, L, \beta_{74}\}$.

The second indication information is also the large-scale parameter of the UE. The second indication information is a set including four element groups, that is, ($B_1$, $B_2$, $B_3$, $B_4$). Each element group $B_j$ includes seven elements ($\beta_{1j}$,$\beta_{2j}$,L ,$\beta_{ij}$,L ,$\beta_{7j}$). The values of j are 1, 2, 3, and 4.

The third indication information includes a first parameter set that $a_{max}$ =2 and a second parameter set that $Nc_{max}$ =4.

The service AP determination criterion is that $\frac{1}{4-1}\sum_{\xi \neq j, \xi=1}^{4} \frac{\beta_{\Omega j}}{\beta_{\Omega \xi}} > 8$. $\Omega$ is the set of candidate APs. $j \neq \xi$. j,$\xi$ are integers between 1 and 4. The elements in $\Omega$ are integers between 1 and 7.

According to the first indication information, UEs are arranged in descending order according to the values of the first reference value of the UEs, and the priority order of UEs in descending order is UE 1, UE 3, UE 2, and UE 4.

The initial value of the set of candidate APs is that $\Omega_0$ = {1,2,3,4,5,6,7}. The initial value of the second counter of each AP in the set of candidate APs is that *N* = {0,0,0,0,0,0,0}.

Since UE 1 has the highest priority, the service AP of UE 1 is first determined. According to the large-scale parameter of the UE, the set $\Omega_0$ of candidate APs, the first parameter set that $a_{max}$ =2, the second parameter set that $Nc_{max}$ =4, and the service AP determination criterion that $\frac{1}{4-1}\sum_{\xi\neq j,\xi=1}^{4}\frac{\beta_{\Omega_0 j}}{\beta_{\Omega_0 \xi}} > 8$, when j=1, the set of service APs of UE 1 is finally determined, that is, $\Omega_{U1}$ ={1,3,4,6} .

The count value of the second counter of each AP in the set of candidate APs after the first update is that *N* = {1,0,1,1,0,1,0}. Since the first parameter set of the number of different UEs the AP at most serves simultaneously is that $a_{max}$ =2, the count value of the second counter of the AP corresponding to the set $\Omega_{U1}$ of service APs of UE 1 does not reach the maximum count value, the second counters of all APs continue to count, and the AP corresponding to the set $\Omega_{U1}$ of service APs of UE 1 continues to remain in the initial set $\Omega_0$ of candidate APs,, so as to obtain a set of candidate APs after the first update, that is, $\Omega_1$ ={1,2,3,4,5,6,7}.

UE 3 has the second highest priority, and the service AP of UE 3 is determined next. According to the large-scale parameter of the UE, the set $\Omega_1$ of candidate APs, the first parameter set $a_{max}$, the second parameter set $Nc_{max}$, and the service AP determination criterion that $\frac{1}{4-1}\sum_{\xi\neq j,\xi=1}^{4}\frac{\beta_{\Omega_1 j}}{\beta_{\Omega_1 \xi}} > 8$, when j=3, the set of service APs of UE 3 is finally determined, that is, $\Omega_{U3}$ ={4,5,7}

The count value of the second counter of each AP in the set of candidate APs after the second update is that *N* = {1,0,1,2,1,1,1}. Since the first parameter set of the number of different UEs the AP at most serves simultaneously is that $a_{max}$ =2, the count value of the second counter of AP 4 reaches the maximum count value, and the second counter of AP 4 stops counting; the count values of second counters of the remaining APs do not reach the maximum counting value, and the second counters of the remaining APs continue counting. AP 4 is removed from the set $\Omega_1$ of candidate APs, and the remaining APs continue to remain in the set $\Omega_1$ of candidate APs, resulting in a set of candidate APs after the second update, that is, $\Omega_2$ ={1,2,3,5,6,7}.

The priority of UE 2 is after UE 1 and UE 3, and the service AP of UE 2 continues to be determined. According to the large-scale parameter of the UE, the set $\Omega_2$ of candidate APs, the first parameter set $a_{max}$, the second parameter set $Nc_{max}$, and the service AP determination criterion that $\frac{1}{4-1}\sum_{\xi\neq j,\xi=1}^{4}\frac{\beta_{\Omega_2 j}}{\beta_{\Omega_2 \xi}} > 8$, when j = 2, the set of service APs of UE 2 is finally determined, that is, $\Omega_{U2}$ ={2,5}.

The count value of the second counter of each AP in the set of candidate APs after a third update is that *N* ={1,1,1,2,2,1,1}. Since the first parameter set of the number of different UEs the AP at most serves simultaneously is that $a_{max}$ =2, the count value of the second counter of AP 5 reaches the maximum count value, and the second counter of AP 5 stops counting; the count values of second counters of the remaining APs do not reach the maximum counting value, and the second counters of the remaining APs continue counting. AP 5 is removed from the set $\Omega_2$ of candidate APs, and the remaining APs continue to remain in the set $\Omega_2$ of candidate APs, resulting in a set of candidate APs after the third update, that is, $\Omega_3$ ={1,2,3,6,7}.

UE 4 has the lowest priority, and the service AP of UE 4 is determined last. According to the large-scale parameter of the UE, the set $\Omega_3$ of candidate APs, the first parameter set $a_{max}$, the second parameter set $Nc_{max}$, and the service AP determination criterion that $\frac{1}{4-1}\sum_{\xi\neq j,\xi=1}^{4}\frac{\beta_{\Omega_3 j}}{\beta_{\Omega_3 \xi}} > 8$, when j=4, the set of service APs of UE 4 is finally determined, that is, $\Omega_{U4}$ ={7}.

After UE 1, UE 2, UE3, and UE 4 all determine service APs, the loop process ends. The sets of service APs of UE 1, UE2, UE3, and UE 4 3 are $\Omega_{U1}$ ={1,3,4,6}, $\Omega_{U2}$ ={2,5}, $\Omega_{U3}$ ={4,5,7}, and $\Omega_{U4}$ ={7}, respectively. Although the second parameter set of the maximum number of collaborative APs for the UE is that $Nc_{max}$ =4, only UE 1 reaches the configured maximum number of different collaborative APs, and UE 4 cannot perform collaborative transmission with only AP 7 at service. After UE 1 determines its service AP, UE 3 then begins to determine its service AP. Although the first parameter set of the number of different UEs the AP at most serves simultaneously is that $a_{max}$ = 2, the set of candidate APs after the first update is that $\Omega_1$ ={1,2,3,4,5,6,7}, and AP 1, AP 2, AP 3, AP 4, AP 5, AP 6, and AP7 may all serve UE 3, but only AP 4, AP 5, and AP7 satisfy the service AP determination criterion. When UE 2 determines its service AP, the set of candidate APs is that $\Omega_2$ ={1,2,3,5,6,7}, but only AP 2 and AP 5 satisfy the service AP determination criterion. That is, the present application determines the sets of service APs of all UEs under the joint action of factors such as the priority order of the UE, the first parameter set $a_{max}$, the second parameter set $Nc_{max}$, the set of candidate APs, and the service AP determination criterion.

In a third example embodiment, FIG. 5 is a diagram illustrating that another service access point is determined according to an embodiment.

The first indication information is the delay requirement of the UE and is denoted as a set ($T_1$, $T_2$, $T_3$), and $T_2 < T_1 < T_3$.

The second indication information is the RSRP parameter of the UE. The second indication information is a set including three element groups, that is, ($RP_1$, $RP_2$, $RP_3$). Each element group $RP_j$ includes seven elements ($RP_{1j}$,$RP_{2j}$,L ,$RP_{ij}$,L ,$RP_{7j}$).

The third indication information includes a first parameter set that $a_{max}$ =2 and a second parameter set that $Nc_{max}$ =2.

The service AP determination criterion is that $RP_{\Omega j} \in [RP_{min}, RP_{max}]$. $\Omega$ is the set of candidate APs. j is an integer between 1 and 3. The elements in $\Omega$ are integers between 1 and 7.

According to the first indication information, UEs are arranged in ascending order according to the values of the delay requirement of the UEs, and the priority order of UEs in descending order is UE 2, UE 1, and UE 3.

The initial value of the set of candidate APs is that $\Omega_0$ ={1,2,3,4,5,6,7}. The initial value of the second counter of each AP in the set of candidate APs is that $N$ ={0,0,0,0,0,0,0}.

Since UE 2 has the highest priority, the service AP of UE 2 is first determined. According to the RSRP parameter of the UE, the set $\Omega_0$ of candidate APs, the first parameter set that $a_{max}$ =2, the second parameter set that $Nc_{max}$ =2, and the service AP determination criterion that $RP_{\Omega 0j} \in [RP_{min}, RP_{max}]$, when j=2, the set of service APs of UE 2 is finally determined, that is, $\Omega_{U2}$ ={2,4}

The count value of the second counter of each AP in the set of candidate APs after the first update is that $N$ ={0,1,0,1,0,0,0}. Since the first parameter set of the number of different UEs the AP at most serves simultaneously is that $a_{max}$ =2, the count value of the second counter of the AP corresponding to the set $\Omega_{U2}$ of service APs of UE 2 does not reach the maximum count value, the second counters of all APs continue to count, the AP corresponding to the set $\Omega_{U2}$ of service APs of UE 2 continues to remain in the initial set $\Omega_0$ of candidate APs, and elements in the set of candidate APs have no change, so as to obtain a set of candidate APs after the first update, that is, $\Omega_1$ ={1,2,3,4,5,6,7}.

UE 1 has the second highest priority, and the service AP of UE 1 is determined next. According to the RSRP parameter of the UE, the set $\Omega_1$ of candidate APs, the first parameter set $a_{max}$, the second parameter set $Nc_{max}$, and the service AP determination criterion that $RP_{\Omega 1j} \in [RP_{min}, RP_{max}]$, when j=1, the set of service APs of UE 1 is finally determined, that is, $\Omega_{U1}$= {1,3}

The count value of the second counter of each AP in the set of candidate APs after the second update is that $N$ ={1,1,1,1,0,0,0}. Since the first parameter set of the number of different UEs the AP at most serves simultaneously is that $a_{max}$ =2, the count value of the second counter of the AP corresponding to the set $\Omega_{U1}$ of service APs of UE 1 does not reach the maximum count value, the second counters of all APs continue to count, the AP corresponding to the set $\Omega_{U1}$ of service APs of UE 1 continues to remain in the set $\Omega_1$ of candidate APs, and elements in the set of candidate APs have no change, so as to obtain a set of candidate APs after the second update, that is, $\Omega_2$ = {1,2,3,4,5,6,7}.

UE 3 has the lowest priority, and the service AP of UE 3 is determined last. According to the RSRP parameter of the UE, the set $\Omega_2$ of candidate APs, the first parameter set $a_{max}$, the second parameter set $Nc_{max}$, and the service AP determination criterion that $RP_{\Omega 2j} \in [RP_{min}, RP_{max}]$, when j = 3, the set of service APs of UE 3 is finally determined, that is, $\Omega_{U3}$ ={4,5}.

After UE 1, UE 2, and UE 3 all determine service APs, the loop process ends. The sets of service APs of UE 1, UE 2, and UE 3 are $\Omega_{U1}$ ={1,3}, $\Omega_{U2}$ ={2,4}, and $\Omega_{U3}$ ={4,5}. All UEs reach the configured maximum number of different collaborative APs. If only the service AP determination criterion is considered, $RP_{43}$, $RP_{53}$, $RP_{63} \in [RP_{min}, RP_{max}]$, and AP 4, AP 5, and AP 6 may all serve UE 3. However, limited by the maximum number of collaborative APs of the UE, only AP 4 and AP 5 are selected to serve UE 3. That is, the present application determines the sets of service APs of all UEs under the joint action of factors such as the priority order of the UE, the first parameter set $a_{max}$, the second parameter set $Nc_{max}$, the set of candidate APs, and the service AP determination criterion.

Embodiments of the present application provide a method for determining a service access point. The method includes the operations below. Indication parameter information is acquired; the indication parameter information includes the first indication information, the second indication information, and the third indication information. The priority order of a terminal device is determined according to the first indication information. Based on the second indication information and the third indication information, a service AP of each terminal device is determined in sequence according to the priority order. In the present application, interference between terminal devices is reduced while a service AP of a terminal device is determined, and communication quality and reliability of the communication system are improved.

FIG. 6 is a diagram illustrating the structure of a service access point determination apparatus according to an embodiment. This apparatus may be configured in an access network device (such as an AP) or a core network device. As shown in FIG. 6, the apparatus includes an acquisition module 10 and a determination module 11.

The acquisition module 10 is configured to acquire indication parameter information; the indication parameter information includes the first indication information, the second indication information, and the third indication information.

The determination module 11 is configured to determine a priority order of a terminal device according to the first indication information and determine, based on the second indication information and the third indication information, a service AP of each terminal device in sequence according to the priority order.

The service access point determination apparatus provided in this embodiment is configured to perform the method for determining a service access point of the embodiment shown in FIG. 2. The implementation principles and technical effects of the service access point determination apparatus provided in this embodiment are similar to those of the preceding embodiments and are not repeated herein.

In an embodiment, the first indication information includes at least one of the following information: a traffic volume requirement of a terminal device, a delay requirement of a terminal device, a signal-to-noise ratio requirement of a terminal device, a large-scale parameter of a terminal device, a reference signal receiving power (RSRP) parameter of a terminal device, or a distance parameter of a terminal device.

In an embodiment, the second indication information includes at least one of the following information: a large-scale parameter of a terminal device, an RSRP parameter of a terminal device, or a distance parameter of a terminal device.

In an embodiment, the third indication information includes a first parameter set and a second parameter set, the first parameter set is configured to indicate the maximum number of different terminal devices simultaneously served by an AP, and the second parameter set is configured to indicate the maximum number of different APs simultaneously serving the terminal device.

In an embodiment, the first indication information includes the traffic volume requirement of the terminal device, the first indication information is a set including K elements, and each element denotes a traffic volume requirement of one terminal device.

The first indication information includes the delay requirement of the terminal device, the first indication information is a set including K elements, and each element denotes a delay requirement of one terminal device.

The first indication information includes the signal-to-noise ratio requirement of the terminal device, the first indication information is a set including K elements, and each element denotes a signal-to-noise ratio requirement of one terminal device.

The first indication information includes the large-scale parameter of the terminal device, the first indication information is a set including K element groups, each element group corresponds to one terminal device and includes M elements, and each element in the element group denotes a large-scale parameter between the terminal device corresponding to the element group and different APs.

The first indication information includes the RSRP parameter of the terminal device, the first indication information is a set including K element groups, each element group corresponds to one terminal device and includes M elements, and each element in the element group denotes an RSRP parameter between the terminal device corresponding to the element group and different APs.

The first indication information includes the distance parameter of the terminal device, the first indication information is a set including K element groups, each element group corresponds to one terminal device and includes M elements, and each element in the element group denotes a distance parameter between the terminal device corresponding to the element group and different APs.

K denotes the number of terminal devices, M denotes the number of APs, and both M and K are integers greater than 1.

In an embodiment, the priority order satisfies at least one of the following:
The first indication information includes the traffic volume requirement of the terminal device, and the priority order is arranged in descending order according to the value of the traffic volume requirement of the terminal device.

The first indication information includes the delay requirement of the terminal device, and the priority order is arranged in ascending order according to the value of the delay requirement of the terminal device.

The first indication information includes the signal-to-noise ratio requirement of the terminal device, and the priority order is arranged in descending order according to the value of the signal-to-noise ratio requirement of the terminal device.

The first indication information includes the large-scale parameter of the terminal device, and the priority order is arranged in descending order according to the value of a first reference value of the terminal device.

The first indication information includes the RSRP parameter of the terminal device, and the priority order is arranged in descending order according to the value of a second reference value of the terminal device.

The first indication information includes the distance parameter of the terminal device, and the priority order is arranged in ascending order according to the value of a third reference value of the terminal device.

In an embodiment, the first indication information includes a large-scale parameter of the terminal device, and the first reference value of the terminal device is an average value of elements in each element group in the first indication information; alternatively, the first reference value of the terminal device is the maximum value of elements in each element group in the first indication information; alternatively, the first reference value of the terminal device is the minimum value of elements in each element group in the first indication information.

In an embodiment, the first indication information includes an RSRP parameter of the terminal device, and the second reference value of the terminal device is an average value of elements in each element group in the first indication information; alternatively, the second reference value of the terminal device is the maximum value of elements in each element group in the first indication information; alternatively, the second reference value of the terminal device is the minimum value of elements in each element group in the first indication information.

In an embodiment, the first indication information includes a distance parameter of the terminal device, and the third reference value of the terminal device is an average value of elements in each element group in the first indication information; alternatively, the third reference value of the terminal device is the maximum value of elements in each element group in the first indication information; alternatively, the third reference value of the terminal device is the minimum value of elements in each element group in the first indication information.

In an embodiment, the determination module 11 is configured to determine, based on the second indication information, the third indication information, and a service AP determination criterion, the service AP of each terminal device in sequence according to the priority order from a set of candidate APs; the set of candidate APs includes all APs capable of serving the terminal device.

In an embodiment, the service AP determination criterion includes at least one of the following:
The value of a large-scale parameter of a service AP of the terminal device is within a specific range.

The value of an RSRP parameter of a service AP of the terminal device is within a specific range.

The value of a distance parameter of a service AP of the terminal device is within a specific range.

The maximum value of the ratio of a large-scale parameter of a service AP of any terminal device to a large-scale parameter between another terminal device and the service AP of the any terminal device is within a specific range.

The minimum value of the ratio of a large-scale parameter of a service AP of any terminal device to a large-scale parameter between another terminal device and the service AP of the any terminal device is within a specific range.

The average value of the ratio of a large-scale parameter of a service AP of any terminal device to a large-scale parameter between another terminal device and the service AP of the any terminal device is within a specific range.

The maximum value of the ratio of an RSRP parameter of a service AP of any terminal device to an RSRP parameter between another terminal device and the service AP of the any terminal device is within a specific range.

The minimum value of the ratio of an RSRP parameter of a service AP of any terminal device to an RSRP parameter between another terminal device and the service AP of the any terminal device is within a specific range.

The average value of the ratio of an RSRP parameter of a service AP of any terminal device to an RSRP parameter between another terminal device and the service AP of the any terminal device is within a specific range.

The maximum value of the ratio of a distance parameter of a service AP of any terminal device to a distance parameter between another terminal device and the service AP of the any terminal device is within a specific range.

The minimum value of the ratio of a distance parameter of a service AP of any terminal device to a distance parameter between another terminal device and the service AP of the any terminal device is within a specific range.

The average value of the ratio of a distance parameter of a service AP of any terminal device to a distance parameter between another terminal device and the service AP of the any terminal device is within a specific range.

In an embodiment, the determination module 11 is configured to initialize the set of candidate APs, a first counter, and a second counter of each AP in the set of candidate APs; configure the count value i of the first counter to be 1, configure an i-th terminal device in the priority order as a target terminal device, and determine, based on the second indication information, the third indication information, and the service AP determination criterion, a service AP of the target terminal device from the set of candidate APs; update the set of candidate APs and the second counter, add 1 to the count value of the first counter, and when i is less than or equal to K, return to the execution of configuring the i-th terminal device in the priority order as the target terminal device and determining, based on the second indication information, the third indication information, and the service AP determination criterion, the service AP of the target terminal device from the set of candidate APs until i is greater than K; K denotes the number of terminal devices, and K is an integer greater than 1.

In an embodiment, the determination module 11 is configured to add 1 to the count value of a second counter of the service AP; in the case where the count value of the second counter of the service AP is less than the maximum count value of the service AP, keep the set of candidate APs unchanged; or in the case where the count value of the second counter of the service AP is equal to the maximum count value of the service AP, stop the counting of the second counter of the service AP and remove the service AP from the set of candidate APs.

FIG. 7 is a flowchart of an information sending method according to an embodiment. As shown in FIG. 7, the method provided in this embodiment is applicable to a terminal device (such as a UE), and the method includes the operation below.

In S210, indication parameter information is sent; the indication parameter information includes the first indication information, the second indication information, and the third indication information.

In an embodiment, the first indication information includes but is not limited to at least one of the following information: a traffic volume requirement of a terminal device, a delay requirement of a terminal device, a signal-to-noise ratio requirement of a terminal device, a large-scale parameter of a terminal device, a reference signal receiving power (RSRP) parameter of a terminal device, or a distance parameter of a terminal device.

If the first indication information includes the traffic volume requirement of the terminal device, the first indication information is a set including K elements, and each element in the set denotes a traffic volume requirement of one terminal device. For example, the first indication information is a set ($Tht_1$, $Tht_2$,L , $Tht_j$,L , $Tht_K$ ) , and $Tht_j$ denotes the traffic volume requirement of terminal device j.

If the first indication information includes the delay requirement of the terminal device, the first indication information is a set including K elements, and each element in the set denotes a delay requirement of one terminal device. For example, the first indication information is a set ($T_1$, $T_2$,L ,$T_j$,L , $T_K$), and $T_j$ denotes the delay requirement of terminal device j.

If the first indication information includes the signal-to-noise ratio requirement of the terminal device, the first indication information is a set including K elements, and each element in the set denotes a signal-to-noise ratio requirement of one terminal device. For example, the first indication information is a set ($SINR_1$,$SINR_2$,L ,$SINR_j$,L ,$SINR_K$), and $SINR_j$ denotes the signal-to-noise ratio requirement of terminal device j.

If the first indication information includes the large-scale parameter of the terminal device, the first indication information is a set including K element groups, each element group in the set corresponds to one terminal device and includes M elements, and each element in the element group denotes a large-scale parameter between the terminal device corresponding to the element group and different APs. For example, the first indication information is a set ($B_1$,$B_2$,L ,$B_j$,L ,$B_K$), the element group $B_j$ corresponds to terminal device j, the element group $B_j$ includes M elements ($\beta_{1j}$, $\beta_{2j}$,L ,$\beta_{ij}$,L ,$\beta_{Mj}$), and $\beta_{ij}$ denotes the large-scale parameter between terminal device j and AP i.

If the first indication information includes the RSRP parameter of the terminal device, the first indication information is a set including K element groups, each element group in the set corresponds to one terminal device and includes M elements, and each element in the element group denotes an RSRP parameter between the terminal device corresponding to the element group and different APs. For example, the first indication information is a set ($RP_1$,$RP_2$,L ,$RP_j$,L ,$RP_K$), the element group $RP_j$ corresponds to terminal device j, the element group $RP_j$ includes M elements ($RP_{1j}$, $RP_{2j}$,L ,$RP_{ij}$,L ,$RP_{Mj}$), and $RP_{ij}$ denotes the RSRP parameter between terminal device j and AP i, that is, the reference signal power of AP i received by terminal device j.

If the first indication information includes the distance parameter of the terminal device, the first indication information is a set including K element groups, each element group in the set corresponds to one terminal device and includes M elements, and each element in the element group denotes a distance parameter between the terminal device corresponding to the element group and different APs. For example, the first indication information is a set ($D_1$,$D_2$,L ,$D_j$,L ,$D_K$), the element group $D_j$ corresponds to terminal device j, the element group $D_j$ includes M elements ($d_{1j}$, $d_{2j}$,L ,$d_{ij}$,L ,$d_{Mj}$), and $d_{ij}$ denotes the distance parameter between terminal device j and AP i, that is, the distance between terminal device j and APi.

In the present application, K denotes the number of terminal devices, M denotes the number of APs, and both M and K are integers greater than 1.

In an embodiment, the second indication information includes but is not limited to at least one of the following information: a large-scale parameter of a terminal device, an RSRP parameter of a terminal device, or a distance parameter of a terminal device.

In an embodiment, the third indication information includes a first parameter set $a_{max}$ and a second parameter set $Nc_{max}$, the first parameter set $a_{max}$ is configured to indicate the maximum number of different terminal devices simultaneously served by an AP, and the second parameter set $Nc_{max}$ is configured to indicate the maximum number of different APs simultaneously serving the terminal device, that is, the maximum number of collaborative APs for a terminal device. Both the elements in the first parameter set $a_{max}$ and the second parameter set $Nc_{max}$ are positive integers.

The first parameter set $a_{max}$ is configured to limit an AP's ability to simultaneously serve different terminal devices. Different APs may have different configurations. For example, if only one element is included in the first parameter set $a_{max}$, it is indicated that all APs simultaneously serve the same maximum number of different terminal devices at most. For another example, if M elements are included in the first parameter set $a_{max}$, some of the M elements have different values or the values of all elements are different, that is, the maximum numbers of different terminal devices that some APs are able to simultaneously serve at most are different, or the maximum numbers of different terminal devices that all APs are able to simultaneously serve at most are completely different.

The second parameter set $Nc_{max}$ is configured to limit the size of the terminal device collaboration set. Different terminal devices may have different configurations. For example, if only one element is included in the second parameter set $Nc_{max}$, it is indicated that the maximum number of collaborative APs of all terminal devices is the same. For another example, if K elements are included in the second parameter set $Nc_{max}$, the values of some of the K elements are different or all of the elements are different, that is, the maximum numbers of collaborative APs of some terminal devices are different, or the maximum numbers of collaborative APs of all terminal devices are completely different.

In an embodiment, the first indication information may be a parameter related to the priority order of the terminal device and configured to determine the priority order of the terminal device; the second indication information and the third indication information are used for determining a service AP of the terminal device.

FIG. 8 is a diagram illustrating the structure of an information sending apparatus according to an embodiment. This apparatus may be configured in the terminal device (such as a UE). As shown in FIG. 8, the apparatus includes a sending module 20.

The sending module 20 is configured to send indication parameter information; the indication parameter information includes the first indication information, the second indication information, and the third indication information.

The information sending apparatus provided in this embodiment is configured to perform the information sending method in the embodiment shown in FIG. 7. The implementation principles and technical effects of the information sending apparatus provided by this embodiment are similar to those of the preceding embodiments and are not repeated herein.

In an embodiment, the first indication information includes at least one of the following information: a traffic volume requirement of a terminal device, a delay requirement of a terminal device, a signal-to-noise ratio requirement of a terminal device, a large-scale parameter of a terminal device, a reference signal receiving power (RSRP) parameter of a terminal device, or a distance parameter of a terminal device.

In an embodiment, the second indication information includes at least one of the following information: a large-scale parameter of a terminal device, an RSRP parameter of a terminal device, or a distance parameter of a terminal device.

In an embodiment, the third indication information includes a first parameter set and a second parameter set, the first parameter set is configured to indicate the maximum number of different terminal devices simultaneously served by an AP, and the second parameter set is configured to indicate the maximum number of different APs simultaneously serving the terminal device.

In an embodiment, the first indication information includes the traffic volume requirement of the terminal device, the first indication information is a set including K elements, and each element denotes a traffic volume requirement of one terminal device.

The first indication information includes the delay requirement of the terminal device, the first indication information is a set including K elements, and each element denotes a delay requirement of one terminal device.

The first indication information includes the signal-to-noise ratio requirement of the terminal device, the first indication information is a set including K elements, and each element denotes a signal-to-noise ratio requirement of one terminal device.

The first indication information includes the large-scale parameter of the terminal device, the first indication information is a set including K element groups, each element group corresponds to one terminal device and includes M elements, and each element in the element group denotes a large-scale parameter between the terminal device corresponding to the element group and different APs.

The first indication information includes the RSRP parameter of the terminal device, the first indication information is a set including K element groups, each element group corresponds to one terminal device and includes M elements, and each element in the element group denotes an RSRP parameter between the terminal device corresponding to the element group and different APs.

The first indication information includes the distance parameter of the terminal device, the first indication information is a set including K element groups, each element group corresponds to one terminal device and includes M elements, and each element in the element group denotes a distance parameter between the terminal device corresponding to the element group and different APs.

K denotes the number of terminal devices, M denotes the number of APs, and both M and K are integers greater than 1.

An embodiment of the present application also provides a communication node. The communication node includes a processor, which is configured to, when executing a computer program, perform the method provided in any embodiment of the present application. In an embodiment, the communication node may be an access network device (such as an AP) or a core network device provided in any embodiment of the present application, which is not In an embodiment limited in the present application.

Exemplarily, the following embodiments separately provide a diagram illustrating the structure of a communication node as an access network device or as a UE.

FIG. 9 is a diagram illustrating the structure of an access network device according to an embodiment. As shown in FIG. 9, the access network device includes a processor 60, a memory 61, and a communication interface 62. One or more processors 60 may be provided in the access network device, and one processor 60 is used as an example in FIG. 9. The processor 60, the memory 61, and the communication interface 62 that are in the access network device may be connected through a bus or in other manners. In FIG. 9, the connection through the bus is used as an example. The bus represents one or more of several types of bus structures, including a memory bus or a memory controller, a peripheral bus, an Accelerated Graphics Port (AGP), a processor or a local bus using any bus structure among multiple bus structures.

As a computer-readable storage medium, the memory 61 may be configured to store software programs, computer-executable programs, and modules, such as program instructions/modules corresponding to the method in the embodiments of the present application. The processor 60 executes software programs, instructions, and modules stored in the memory 61 to perform at least one functional application and data processing of the access network device, that is, to implement the preceding method.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed relative to the processor 60, and these remote memories may be connected to the access network device via a network. Examples of the preceding network include but are not limited to, the Internet, an intranet, a network, a communication network, and a combination thereof.

The communication interface 62 may be configured to receive and send data.

FIG. 10 is a diagram illustrating the structure of a UE according to an embodiment. The UE may be implemented in multiple forms. The UE in the present application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 10, a UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 10 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

The embodiments of the present application also provide a computer-readable storage medium. The computer-readable storage medium is configured to store a computer program which, when executed by a processor, implements the method provided by any one of the embodiments of the present application.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be in any type suitable for the local technical environment, for example, but not limited to, a general-purpose computer, a special-purpose computer, a microprocessor, a digital signal processing (DSP), an application-specific integrated circuit (ASIC), a field-programmable gate array (FGPA), and a processor based on a multi-core processor architecture.

## Claims

**1.** A method for determining a service access point, AP, comprising:

acquiring indication parameter information, wherein the indication parameter information comprises first indication information, second indication information, and third indication information;
determining a priority order of a terminal device according to the first indication information; and
determining, based on the second indication information and the third indication information, a service AP of each terminal device in sequence according to the priority order.

2. The method of claim 1, wherein the first indication information comprises at least one of the following information: a traffic volume requirement of the terminal device, a delay requirement of the terminal device, a signal-to-noise ratio requirement of the terminal device, a large-scale parameter of the terminal device, a reference signal receiving power, RSRP, parameter of the terminal device, or a distance parameter of the terminal device.

3. The method of claim 1, wherein the second indication information comprises at least one of the following information: a large-scale parameter of the terminal device, an RSRP parameter of the terminal device, or a distance parameter of the terminal device.

4. The method of claim 1, wherein the third indication information comprises a first parameter set and a second parameter set, the first parameter set is configured to indicate a maximum number of different terminal devices simultaneously served by an AP, and the second parameter set is configured to indicate a maximum number of different APs simultaneously serving the terminal device.

5. The method of claim 2, wherein

the first indication information comprises the traffic volume requirement of the terminal device, the first indication information is a set comprising K elements, and each element denotes a traffic volume requirement of one terminal device;
the first indication information comprises the delay requirement of the terminal device, the first indication information is a set comprising K elements, and each element denotes a delay requirement of one terminal device;
the first indication information comprises the signal-to-noise ratio requirement of the terminal device, the first indication information is a set comprising K elements, and each element denotes a signal-to-noise ratio requirement of one terminal device;
the first indication information comprises the large-scale parameter of the terminal device, the first indication information is a set comprising K element groups, each element group corresponds to one terminal device and comprises M elements, and each element in the each element group denotes a large-scale parameter between the one terminal device corresponding to the each element group and different APs;
the first indication information comprises the RSRP parameter of the terminal device, the first indication information is a set comprising K element groups, each element group corresponds to one terminal device and comprises M elements, and each element in the each element group denotes an RSRP parameter between the terminal device corresponding to the each element group and different APs;
the first indication information comprises the distance parameter of the terminal device, the first indication information is a set comprising K element groups, each element group corresponds to one terminal device and comprises M elements, and each element in the each element group denotes a distance parameter between the terminal device corresponding to the each element group and different APs; and
K denotes a number of terminal devices, M denotes a number of APs, and both M and K are integers greater than 1.

6. The method of claim 5, wherein the priority order satisfies at least one of the following:

the first indication information comprises the traffic volume requirement of the terminal device, and the priority order is arranged in descending order according to a value of the traffic volume requirement of the terminal device;
the first indication information comprises the delay requirement of the terminal device, and the priority order is arranged in ascending order according to a value of the delay requirement of the terminal device;
the first indication information comprises the signal-to-noise ratio requirement of the terminal device, and the priority order is arranged in descending order according to a value of the signal-to-noise ratio requirement of the terminal device;
the first indication information comprises the large-scale parameter of the terminal device, and the priority order is arranged in descending order according to a value of a first reference value of the terminal device;
the first indication information comprises the RSRP parameter of the terminal device, and the priority order is arranged in descending order according to a value of a second reference value of the terminal device; or
the first indication information comprises the distance parameter of the terminal device, and the priority order is arranged in ascending order according to a value of a third reference value of the terminal device.

7. The method of claim 6, wherein the first indication information comprises the large-scale parameter of the terminal device, and the first reference value of the terminal device is an average value of elements in the each element group in the first indication information; or the first reference value of the terminal device is a maximum value of elements in the each element group in the first indication information; or the first reference value of the terminal device is a minimum value of elements in the each element group in the first indication information.

**8.** The method of claim 6, wherein the first indication information comprises the RSRP parameter of the terminal device, and the second reference value of the terminal device is an average value of elements in the each element group in the first indication information; or the second reference value of the terminal device is a maximum value of elements in the each element group in the first indication information; or the second reference value of the terminal device is a minimum value of elements in the each element group in the first indication information.

**9.** The method of claim 6, wherein the first indication information comprises the distance parameter of the terminal device, and the third reference value of the terminal device is an average value of elements in the each element group in the first indication information; or the third reference value of the terminal device is a maximum value of elements in the each element group in the first indication information; or the third reference value of the terminal device is a minimum value of elements in the each element group in the first indication information.

**10.** The method of any one of claims 1 to 9, wherein determining, based on the second indication information and the third indication information, the service AP of the each terminal device in sequence according to the priority order comprises:
determining, based on the second indication information, the third indication information, and a service AP determination criterion, the service AP of the each terminal device in sequence according to the priority order from a set of candidate APs, wherein the set of candidate APs comprises all APs capable of serving the terminal device.

**11.** The method of claim 10, wherein the service AP determination criterion comprises at least one of the following:

a value of a large-scale parameter of a service AP of the terminal device is within a specific range;
a value of an RSRP parameter of a service AP of the terminal device is within a specific range;
a value of a distance parameter of a service AP of the terminal device is within a specific range;
a maximum value of a ratio of a large-scale parameter of a service AP of any terminal device to a large-scale parameter between another terminal device and the service AP of the any terminal device is within a specific range;
a minimum value of a ratio of a large-scale parameter of a service AP of any terminal device to a large-scale parameter between another terminal device and the service AP of the any terminal device is within a specific range;
an average value of a ratio of a large-scale parameter of a service AP of any terminal device to a large-scale parameter between another terminal device and the service AP of the any terminal device is within a specific range;
a maximum value of a ratio of an RSRP parameter of a service AP of any terminal device to an RSRP parameter between another terminal device and the service AP of the any terminal device is within a specific range;
a minimum value of a ratio of an RSRP parameter of a service AP of any terminal device to an RSRP parameter between another terminal device and the service AP of the any terminal device is within a specific range;
an average value of a ratio of an RSRP parameter of a service AP of any terminal device to an RSRP parameter between another terminal device and the service AP of the any terminal device is within a specific range;
a maximum value of a ratio of a distance parameter of a service AP of any terminal device to a distance parameter between another terminal device and the service AP of the any terminal device is within a specific range;
a minimum value of a ratio of a distance parameter of a service AP of any terminal device to a distance parameter between another terminal device and the service AP of the any terminal device is within a specific range; or
an average value of a ratio of a distance parameter of a service AP of any terminal device to a distance parameter between another terminal device and the service AP of the any terminal device is within a specific range.

**12.** The method of claim 10, wherein determining, based on the second indication information, the third indication information, and the service AP determination criterion, the service AP of the each terminal device in sequence according to the priority order from the set of candidate APs comprises:

initializing the set of candidate APs, a first counter, and a second counter of each AP in the set of candidate APs;
configuring a count value i of the first counter to be 1, configuring an i-th terminal device in the priority order as a target terminal device, and determining, based on the second indication information, the third indication information, and the service AP determination criterion, a service AP of the target terminal device from the set of candidate APs; and

updating the set of candidate APs and the second counter, adding 1 to the count value of the first counter, and in a case where i is less than or equal to K, returning to the execution of configuring the i-th terminal device in the priority order as the target terminal device and determining, based on the second indication information, the third indication information, and the service AP determination criterion, the service AP of the target terminal device from the set of candidate APs until i is greater than K, wherein K denotes a number of terminal devices, and K is an integer greater than 1.

**13.** The method of claim 12, wherein updating the set of candidate APs and the second counter comprises:

adding 1 to a count value of a second counter of the service AP of the target terminal device;

in a case where the count value of the second counter of the service AP of the target terminal device is less than a maximum count value of the service AP of the target terminal device, keeping the set of candidate APs unchanged; or

in a case where the count value of the second counter of the service AP of the target terminal device is equal to a maximum count value of the service AP of the target terminal device, stopping counting of the second counter of the service AP of the target terminal device, and removing the service AP of the target terminal device from the set of candidate APs.

**14.** An information sending method, comprising:

sending indication parameter information, wherein the indication parameter information comprises first indication information, second indication information, and third indication information.

**15.** The method of claim 14, wherein the first indication information comprises at least one of following information: a traffic volume requirement of a terminal device, a delay requirement of a terminal device, a signal-to-noise ratio requirement of a terminal device, a large-scale parameter of a terminal device, a reference signal receiving power, RSRP, parameter of a terminal device, or a distance parameter of a terminal device.

**16.** The method of claim 14, wherein the second indication information comprises at least one of following information: a large-scale parameter of a terminal device, an RSRP parameter of a terminal device, or a distance parameter of a terminal device.

**17.** The method of claim 14, wherein the third indication information comprises a first parameter set and a second parameter set, the first parameter set is configured to indicate a maximum number of different terminal devices simultaneously served by an AP, and the second parameter set is configured to indicate a maximum number of different APs simultaneously serving the terminal device.

**18.** A communication node, comprising a processor that is configured to, when executing a computer program, implement the method for determining the service access point of any one of claims 1 to 13 or implement the information sending method of any one of claims 14 to 17.

**19.** A computer-readable storage medium storing a computer program which, when executed by a processor, implements the method for determining the service access point of any one of claims 1 to 13 or implements the information sending method of any one of claims 14 to 17.

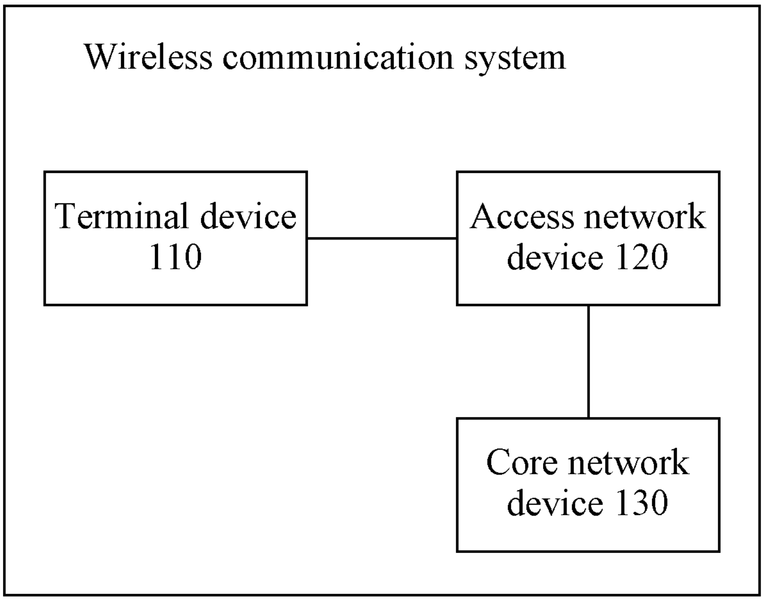
Wireless communication system
Terminal device 110
Access network device 120
Core network device 130

FIG. 1

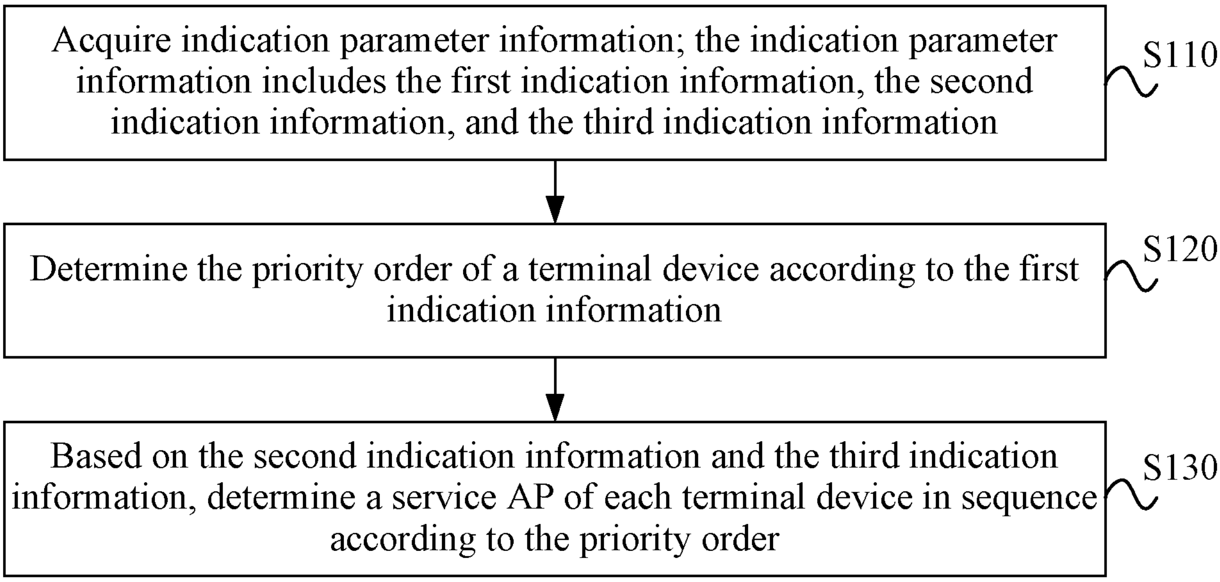
Acquire indication parameter information; the indication parameter information includes the first indication information, the second indication information, and the third indication information
S110
Determine the priority order of a terminal device according to the first indication information
S120
Based on the second indication information and the third indication information, determine a service AP of each terminal device in sequence according to the priority order
S130

FIG. 2

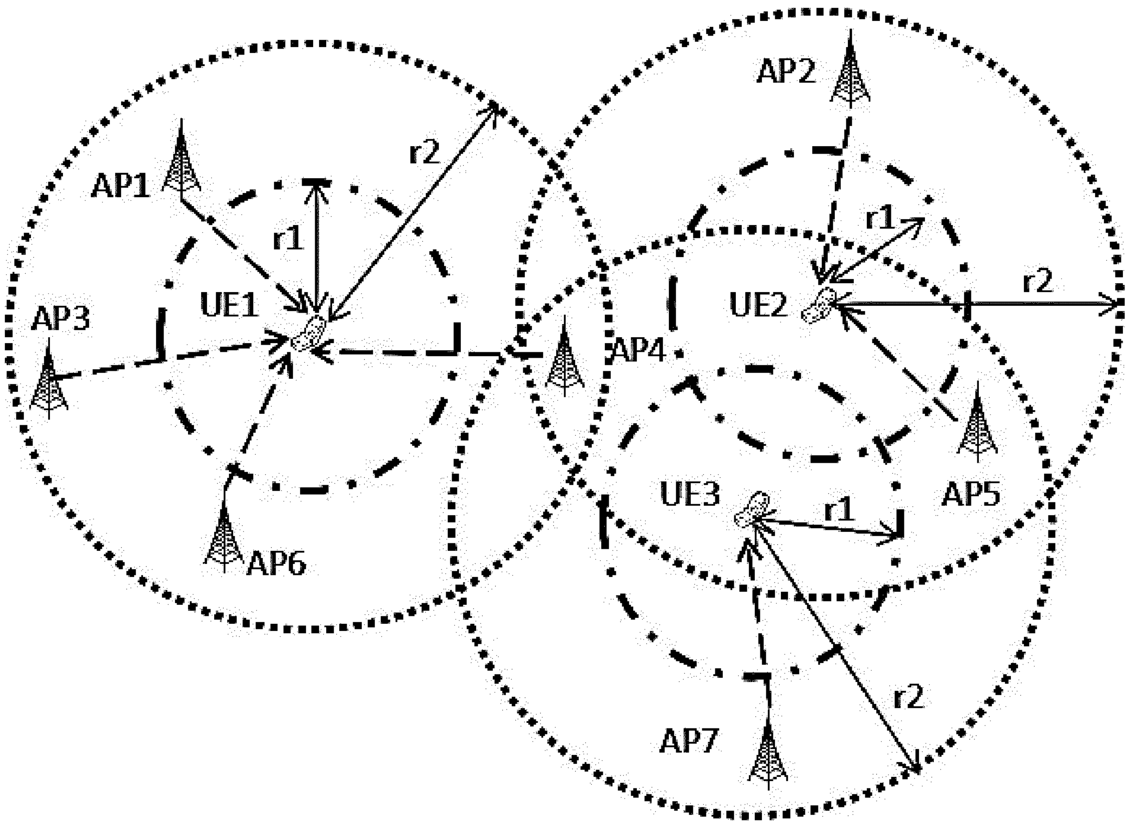
AP1
AP2
AP3
AP4
AP5
AP6
AP7
UE1
UE2
UE3
r1
r2

FIG. 3

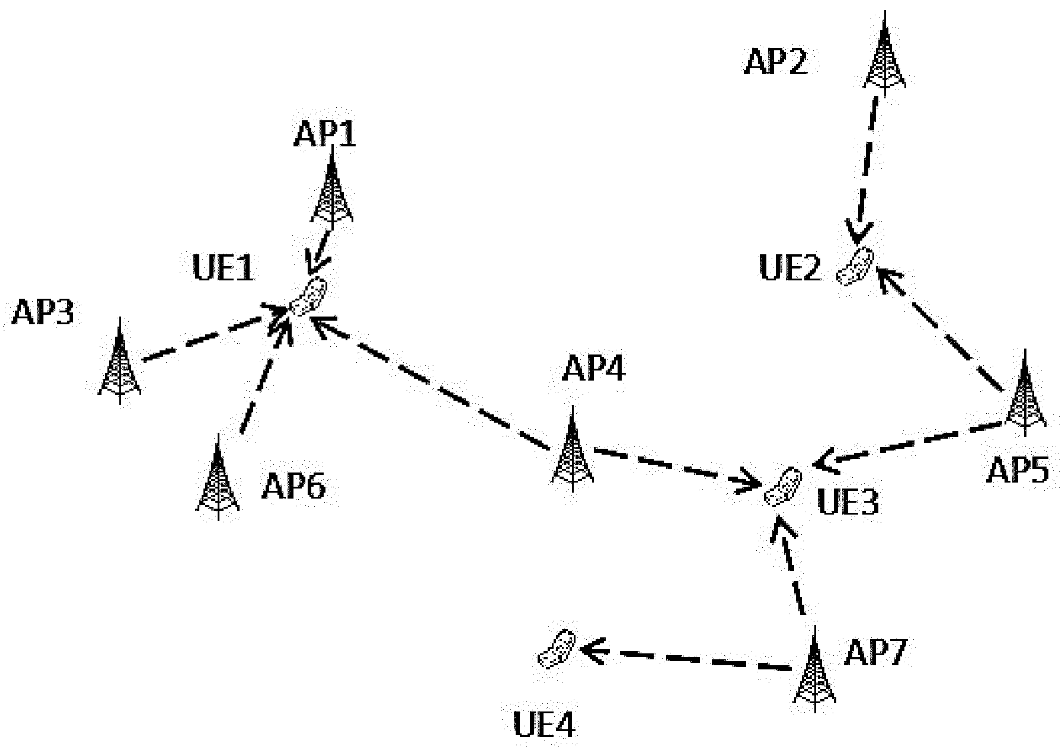
AP1
AP2
AP3
AP4
AP5
AP6
AP7
UE1
UE2
UE3
UE4

FIG. 4

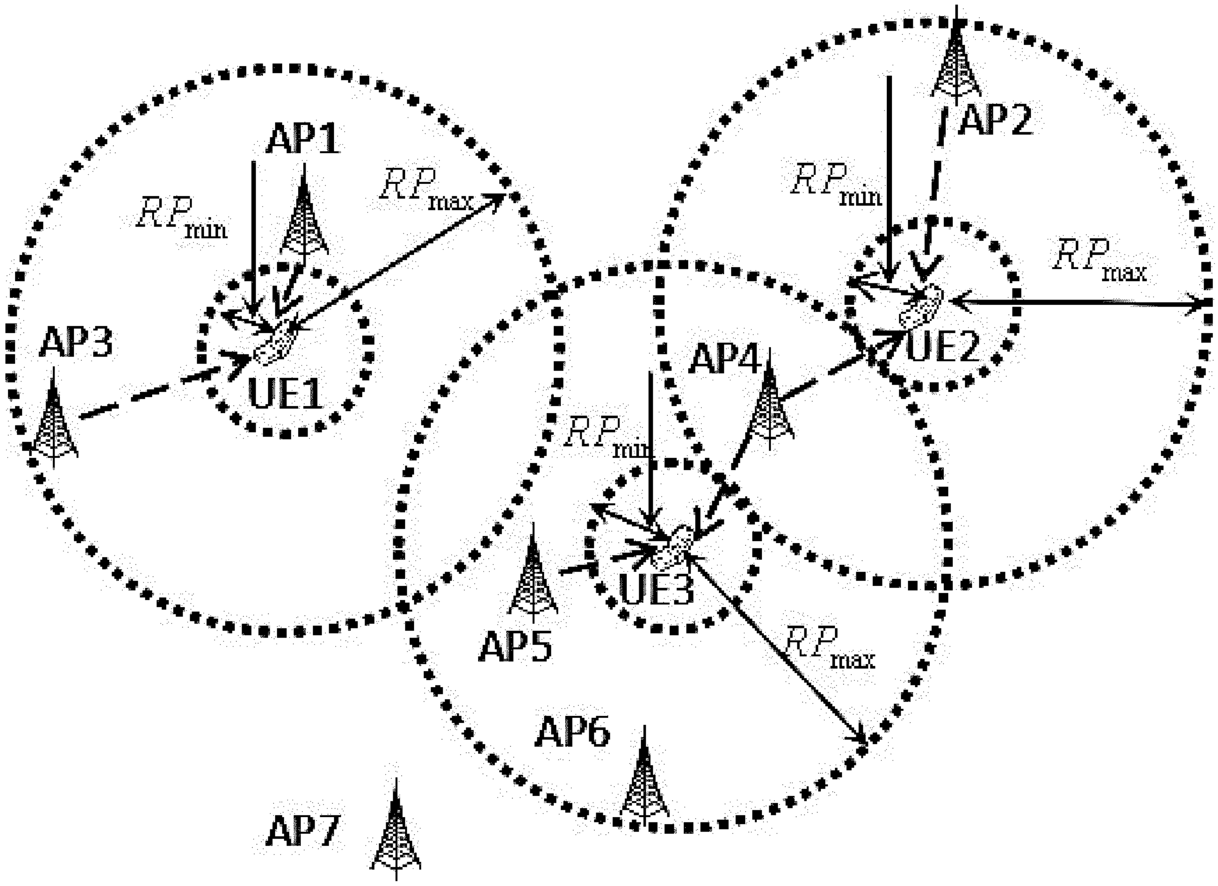


FIG. 5

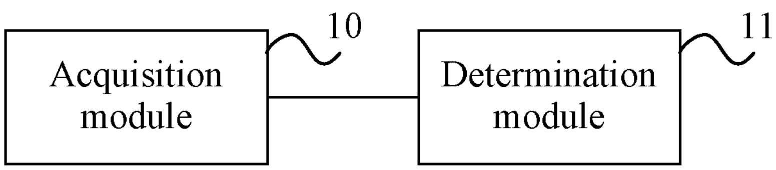


FIG. 6

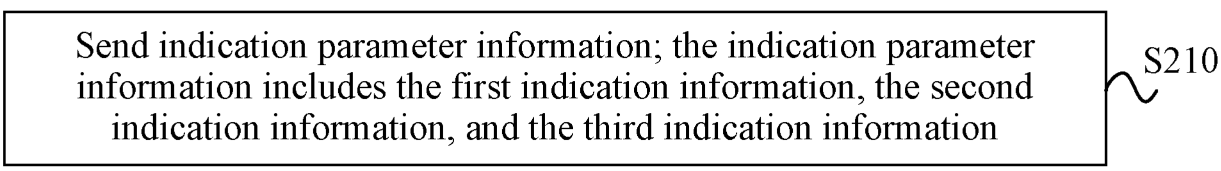


FIG. 7

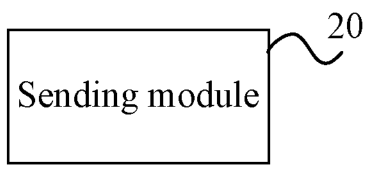
Sending module
20

FIG. 8

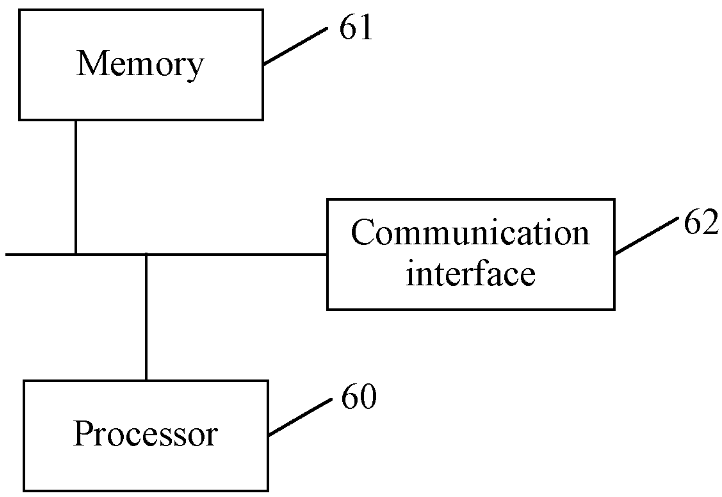
Memory
61
Communication interface
62
Processor
60

FIG. 9

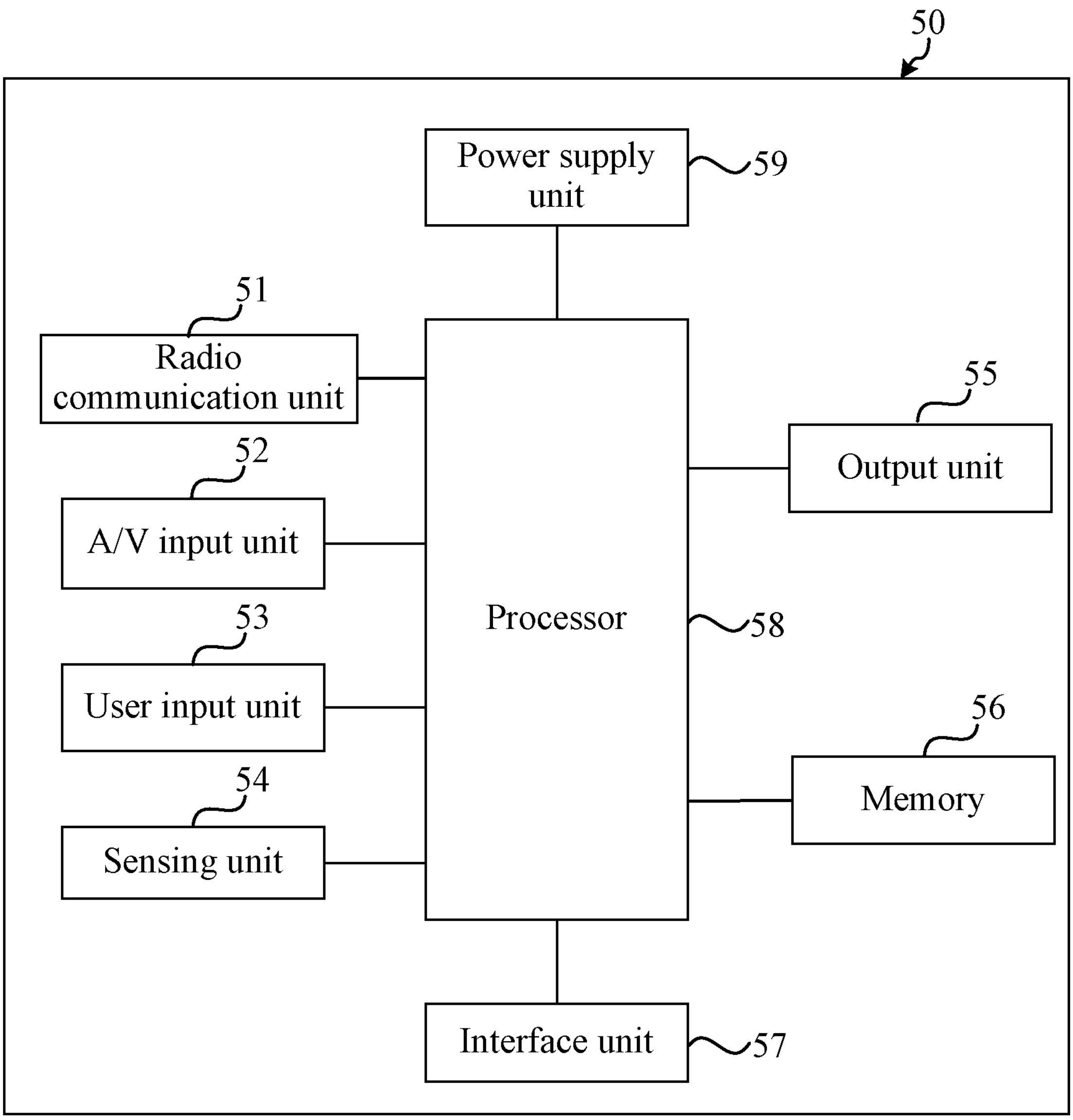
50
Power supply unit
59
51
Radio communication unit
52
A/V input unit
53
User input unit
54
Sensing unit
Processor
58
55
Output unit
56
Memory
Interface unit
57

FIG. 10

**INTERNATIONAL SEARCH REPORT**

International application No. **PCT/CN2022/131642**

**A. CLASSIFICATION OF SUBJECT MATTER**

H04W48/02(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT, ENTXTC, DWPI, ENTXT, VEN, 3GPP: 接入, 接入点, 基站, 优先级, 参考信号接收功率, 大尺度参数, 距离, 确定, 选择, 时延, 信噪比, 业务量, 协作, 协同, 合作, access+, access point, AP, NB, NodeB, RSRP, large scal, distance, determin+, select+, latency, SNR, traffic, cooperat+

**C. DOCUMENTS CONSIDERED TO BE RELEVANT**

| Category* | Citation of document, with indication, where appropriate, of the relevant passages | Relevant to claim No. |
|---|---|---|
| Y | CN 111465066 A (ZHEJIANG HUAYUN INFORMATION TECHNOLOGY CO., LTD.) 28 July 2020 (2020-07-28)<br>description, paragraphs 0062-00070 | 1-19 |
| Y | US 2014313901 A1 (YACOVITCH BOB DANIEL) 23 October 2014 (2014-10-23)<br>description, paragraphs 0028-0034 | 1-19 |
| A | CN 107493594 A (SHENZHEN SHENGLU IOT COMMUNICATION TECHNOLOGY CO., LTD.) 19 December 2017 (2017-12-19)<br>entire document | 1-19 |

☐ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **30 January 2023** | **06 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2022/131642**

| Patent document cited in search report | | | Publication date (day/month/year) | Patent family member(s) | | | Publication date (day/month/year) |
|---|---|---|---|---|---|---|---|
| CN | 111465066 | A | 28 July 2020 | None | | | |
| US | 2014313901 | A1 | 23 October 2014 | US | 9351197 | B2 | 23 October 2014 |
| | | | | EP | 2801231 | A1 | 12 November 2014 |
| | | | | EP | 2801231 | A4 | 12 November 2014 |
| | | | | EP | 2801231 | B1 | 12 November 2014 |
| | | | | WO | 2013103349 | A1 | 11 July 2013 |
| CN | 107493594 | A | 19 December 2017 | None | | | |

Form PCT/ISA/210 (patent family annex) (July 2022)